# EUROPÄISCHE PATENTANMELDUNG

(11) **EP 1 229 227 A2**
(43) Veröffentlichungstag der Anmeldung: **07.08.2002**
(21) Anmeldenummer: 02000560.9
(22) Anmeldetag: 10.01.2002
(51) Int. Cl.: F02D 19/12

(54) **Flüssigkeitszudosiersystem**

(30) Priorität: 06.02.2001 DE 20102002 U
(71) Anmelder: J. Eberspächer GmbH Co. KG, 73730 Esslingen (DE)
(72) Erfinder: Eberspach, Günter, 72649 Wolfschlugen (DE)

(57) **Zusammenfassung**

Ein Flüssigkeitszudosiersystem, insbesondere zum Zudosieren von Flüssigkeit zu einem Brennstoff oder zu bei einer Verbrennung sich ergebenden Abgasen, umfaßt eine elektrisch betreibbare Dosierpumpeinrichtung (14) zum Fördern der zudosierenden Flüssigkeit von einem Zudosierflüssigkeitstank (18) zu dem mit Zudosierflüssigkeit zu vermischenden Medium, eine Erfassungsanordnung (38) zum Erfassen einer im Betrieb der Dosierpumpeinrichtung (14) sich einstellenden und diesen charakterisierenden Betriebsgröße sowie eine Vergleichs/Entscheidungs-Einrichtung (42, 44) zum Vergleichen der Betriebsgröße mit wenigstens einem Referenzwert und zum Bestimmen des Betriebszustandes der Dosierpumpeinrichtung (14) beruhend auf dem Vergleichsergebnis.

## Beschreibung

Die vorliegende Erfindung betrifft ein Flüssigkeitszudosiersystem, insbesondere zum Zudosieren von Flüssigkeit zu einem Brennstoff oder zu bei einer Verbrennung sich ergebenden Abgasen.

Auf Grund der ständig steigenden Anforderung an die Mengenreduktion von in in Brennkraftmaschinen, insbesondere Dieselmotoren, erzeugten Abgasen enthaltenen schädlichen Substanzen, wie z.B. Stickoxid oder Rußpartikel, sind Systeme entwickelt worden, bei welchen durch die Beimengung verschiedener Substanzen entweder zu dem in der Brennkraftmaschine verbrannten Brennstoff oder zu den bei der Verbrennung erzeugten Abgasen Reaktionen ausgelöst werden, die beispielsweise zur Verringerung des Stickoxidanteils im Abgas oder auch zur Verringerung der Anzahl der im Abgas enthaltenen Partikel beitragen. Beispielsweise ist es bekannt, durch die Beimengung metallhaltiger Additive zum Brennstoff, die Zündtemperatur der im Abgas enthaltenen Rußpartikel herabzusetzen so dass unter Ausnutzung der Eigenwärme des Abgases diese Rußpartikel entzündet und verbrannt werden. Die Belastung eines im Abgasführungssystem enthaltenen Partikelfilters kann somit deutlich vermindert werden. Zur NOx-Reduktion ist es bekannt, durch Zudosierung von Harnstoff zu erreichen, dass in einem speziellen Katalysator die im Abgas enthaltenen Stickoxide unter Wasserbildung zu Stickstoff reduziert werden. Während im Falle der Verringerung der Partikelanzahl eine Beimengung der zuzudosierenden Flüssigkeit zu dem zur Brennkraftmaschine geförderten Kraftstoff erfolgt, wird im Falle der NOx-Reduktion die zuzudosierende Flüssigkeit direkt in das die Brennkraftmaschine verlassende Abgas eingespritzt. In beiden Fällen kann der gewünschte korrekte Reaktionsablauf nur dann erhalten werden, wenn die zuzudosierende Flüssigkeit und das diese aufnehmende Medium, also beispielsweise der noch nicht verbrannte Brennstoff oder die Verbrennungsabgase, in einem definierten Mengenverhältnis zueinander stehen. Es ist also erforderlich, die zuzudosierende Flüssigkeit mit hoher Präzision hinsichtlich der Fördermenge zu fördern. Eine falsche Fördermenge kann zur Folge haben, dass Systemkomponenten im Abgassystem, wie z.B. ein Partikelfilter, beschädigt werden oder nur mit deutlich reduzierter Effizienz arbeiten können.

Es ist die Aufgabe der vorliegenden Erfindung, ein Flüssigkeitszudosiersystem, insbesondere zum Zudosieren von Flüssigkeit zu einem Brennstoff oder zu bei einer Verbrennung sich ergebenden Abgasen, vorzusehen, bei welchem Zustände fehlerhafter Zudosierung schnell und mit hoher Präzision erfasst werden können.

Gemäß der vorliegenden Erfindung wird diese Aufgabe gelöst durch ein Flüssigkeitszudosiersystem, insbesondere zum Zudosieren von Flüssigkeit zu einem Brennstoff oder zu bei einer Verbrennung sich ergebenden Abgasen, umfassend: eine elektrisch betreibbare Dosierpumpeinrichtung zum Fördern der zuzudosierenden Flüssigkeit von einem Zudosierflüssigkeitstank zu dem mit Zudosierflüssigkeit zu vermischenden Medium, eine Erfassungsanordnung zum Erfassen einer im Betrieb der Dosierpumpeinrichtung sich einstellenden und diesen charakterisierenden Betriebsgröße, eine Vergleichs/Entscheidungs-Einrichtung zum Vergleichen der Betriebsgröße mit wenigstens einem Referenzwert und zum Bestimmen des Betriebszustandes der Dosierpumpeinrichtung beruhend auf dem Vergleichsergebnis.

Es ist erkannt worden, dass durch Beobachtung bzw. Charakterisierung des Betriebsverhaltens der elektrisch betreibbaren Dosierpumpeinrichtung mit hoher Präzision darauf geschlossen werden kann, ob diese korrekt arbeitet oder nicht, d.h. beispielsweise, ob sie ein flüssiges Medium oder ob sie ein gasartiges Medium fördert. Weiter ist es auf Grund der Beobachtung der für den Betrieb der Dosierpumpeinrichtung charakteristischen Betriebsgröße möglich, zu erkennen, in welchen Systembereichen der Dosierpumpeinrichtung ein Fehler aufgetreten ist, was die Erzeugung einer entsprechenden Warnung oder das Ergreifen von Gegenmaßnahmen ermöglicht.

Um die Präzision, mit welcher die Entscheidung hinsichtlich des Betriebszustands gefällt werden kann, weiter zu erhöhen, wird vorgeschlagen, dass in der Vergleichs/Entscheidungs-Einrichtung eine Mehrzahl von Referenzwerten nach Art eines Kennfeldes zum Vergleich mit der Betriebsgröße vorgesehen ist.

Ein besonders vorteilhaftes Charakteristikum der vorliegenden Erfindung, bei welcher die im Dosierpumpbetrieb sich ergebende oder einstellende charakteristische Betriebsgröße beobachtet wird, ist, dass die Vergleichs/Entscheidungs-Einrichtung dazu ausgebildet ist, beruhend auf einer Abweichung der Betriebsgröße von dem wenigstens einen Referenzwert eine Unterscheidung zwischen verschiedenen Betriebszuständen der Dosierpumpeinrichtung vorzunehmen. Insbesondere kann durch den sich einstellenden Unterschied zwischen der beobachteten Betriebsgröße und dem wenigstens einen Referenzwert darauf geschlossen werden, in welchen Systembereichen Fehler vorliegen bzw. welche Art von Fehler, also beispielsweise die Förderung des falschen Mediums, vorliegt.

Eine weitere Maßnahme, welche zum Erhöhen der Entscheidungspräzision beitragen kann, sieht vor, dass in der Vergleichs/Entscheidungs-Einrichtung für eine Mehrzahl verschiedener Betriebsparameter, wie z.B. der Betriebstemperatur, verschiedene Referenzwerte vorgesehen sind. Durch Miteinbeziehung verschiedener für den Betrieb charakteristischer Parameter, wie z.B. die Betriebstemperatur, welche selbstverständlich auch einen Einfluss auf die Viskosität des zu fördernden flüssigen Mediums hat, kann bei der Entscheidung hinsichtlich des Betriebszustands das allgemeine Umfeld mitberücksichtigt werden.

Gemäß einem besonders vorteilhaften Aspekt der vorliegenden Erfindung kann vorgesehen sein, dass die Erfassungsanordnung dazu ausgebildet ist, als Betriebsgröße einen im Betrieb der Dosierpumpeinrichtung fließenden Pumpstrom zu erfassen. Der Pumpstrom ist eine Größe, die besonders einfach erfasst werden kann und die sowohl hinsichtlich charakteristischer Werte, beispielsweise Maximal- oder Minimalwerte, als auch hinsichtlich des Verlaufs sehr einfach und mit hoher Präzision ausgewertet werden kann.

Die vorliegende Erfindung wird nachfolgend mit Bezug auf die beiliegenden Zeichnungen detailliert beschrieben. Es zeigt:
- Fig. 1: eine blockbildartige Darstellung eines erfindungsgemäßen Flüssigkeitszudosiersystems;
- Fig. 2: eine weitere blockbildartige Darstellung der bei dem erfindungsgemäßen Flüssigkeitszudosiersystem eingesetzten Dosierpumpeinrichtung.

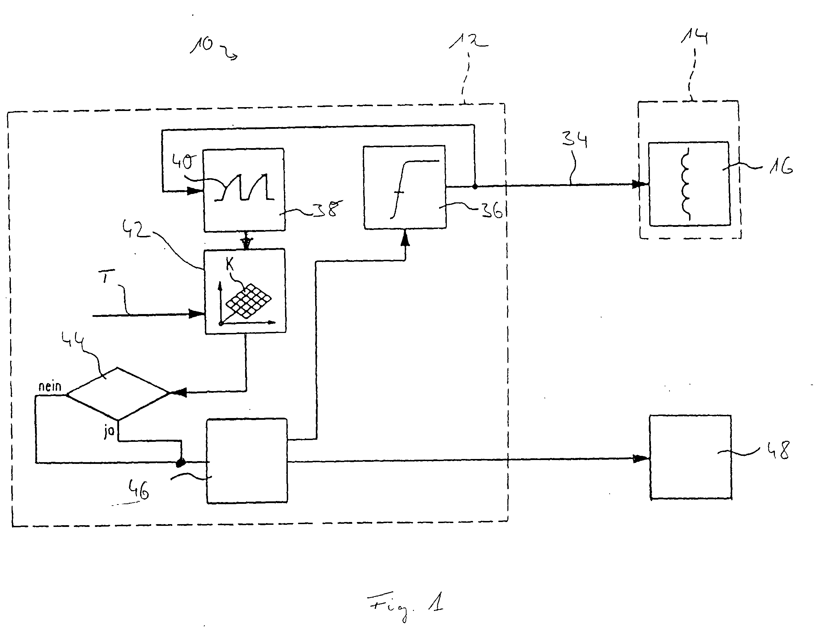

Das in Fig. 1 schematisch dargestellte Flüssigkeitszudosiersystem 10 umfasst als wesentliche Bestandteile eine Ansteuervorrichtung 12 sowie eine durch diese Ansteuervorrichtung 12 ansteuerbare Dosierpumpeinrichtung 14. Diese Dosierpumpeinrichtung 14 ist, wie durch die in Fig. 1 schematisch dargestellte Spule 16 angedeutet, elektrisch betreibbar, d.h. durch Bestromung kann die Dosierpumpeinrichtung 14 in Betrieb gesetzt werden.

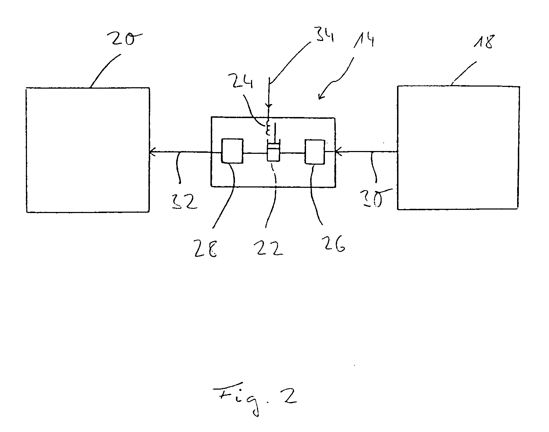

Diese Dosierpumpeinrichtung 14, welche in Fig. 2 dargestellt ist, dient dazu, zuzudosierende Flüssigkeit, welche im Allgemeinen als Additiv bezeichnet wird, von einem Tank 18 für diese zuzudosierende Flüssigkeit zu demjenigen Medium zu fördern, das diese zuzudosierende Flüssigkeit, d. h. das Additiv, aufnehmen soll. Im dargestellten Beispiel ist dies der Brennstoff, der in einer Brennkraftmaschine verbrannt werden soll, so dass vermittels der Dosierpumpeinrichtung 14 von dem Tank 18 der zuzudosierenden Flüssigkeit diese zu dem Brennstofftank 20 gefördert wird.

Die Dosierpumpeinrichtung 14 umfasst einen Pumpbereich 22, beispielsweise in Form einer Kolbenpumpe, der eine elektromagnetisch wirkende Spule 24 zugeordnet ist. Durch Bestromung bzw. Erregung der Spule 24 kann ein mit dem Pumpenkolben verbundener Anker in an sich bekannter Weise bewegt werden, so dass beispielsweise bei Erregung der Spule 24 der Kolben zum Vergrößern einer Pumpenkammer verlagert wird und bei Beendung der Erregung beispielsweise unter Vorspannung der Kolben wieder in die Pumpenkammer eintaucht. Die Dosierpumpeinrichtung 14 umfasst ferner ein Einlassventil 26 und ein Auslassventil 28. Diese beiden Ventile 26, 28 können durch diesen jeweils zugeordneten Spulen oder sonstige Bewegungsmechanismen aktiviert werden, können gleichwohl jedoch auch durch bzw. bei Erregung der Spule 24 aktiviert werden. Selbstverständlich ist es auch möglich, diese beiden Ventile 26, 28 in eine Ventilbaugruppe zu integrieren und letztendlich durch Bereitstellen eines einzigen Ventilschiebers ein wahlweises Umschalten der Flüssigkeitsverbindung zu erzeugen. Dabei wird der Pumpbereich 22 wahlweise in Verbindung mit dem Tank 18 für die zuzudosierende Flüssigkeit gebracht, um in einem Ansaughub in der Pumpeinrichtung Flüssigkeit beispielsweise über eine Zuführleitung 30 aufzunehmen. In einem Abgabehub wird dann eine Flüssigkeitsverbindung des Pumpbereichs 22 mit dem Brennstofftank 20, beispielsweise über eine Abführleitung 32, hergestellt.

Es sei noch einmal darauf hingewiesen, dass vorangehend nur grundsätzlich das Funktionsprinzip bzw. der prinzipielle Aufbau einer derartigen Dosierpumpeinrichtung 14 beschrieben worden ist. Es sind sowohl hinsichtlich des Funktionsprinzips als auch hinsichtlich des Aufbaus verschiedenste Ausgestaltungsformen heranziehbar. Von Bedeutung ist jedoch, dass eine derartige Dosierpumpeinrichtung 14 durch Ansteuerung der Ansteuervorrichtung 12 aktivierbar ist, also beispielsweise durch Zufuhr eines entsprechenden Pumpstroms über eine in den Figuren 1 und 2 dargestellte Ansteuerleitung 34. Die zu fördernde Menge kann durch die Taktfrequenz, mit welcher eine derartige Kolbenhubpumpe betrieben wird, eingestellt werden, wobei eine Vorgabegröße die pro Kolbenhub förderbare Flüssigkeitsmenge ist. Um hier die korrekte Zudosiermenge vorzugeben, kann beispielsweise weiter erfasst werden, wie groß diein den Kraftstofftank 20 eingeleitete Brennstoffmenge ist, so dass anhand des an sich bekannten Mengenverhältnisses zwischen zuzudosierender Flüssigkeit und Brennstoff beispielsweise festgelegt werden kann, in welchem Ausmaß, beispielsweise mit welcher Taktanzahl, die Dosierpumpeinrichtung 14 zu betreiben ist.

Um die Dosierpumpeinrichtung 14 in korrekter Art und Weise zu betreiben, ist in der Ansteuervorrichtung 12 ein Steuerbereich 36 vorgesehen, der beispielsweise beruhend auf der zuvor erfassten Brennstoffmenge ein entsprechendes Ansteuersignal über die Ansteuerleitung 34 zu der Dosierpumpeinrichtung 14 leitet. Dieses letztendlich in Form eines Ansteuerstroms bzw. Spulenstroms ausgegebene Ansteuersignal kann in einem Detektor 38 erfasst werden, so dass letztendlich im Detektor 38 Information über den in der Spule 24 fließenden Pumpstrom gesammelt werden kann, beispielsweise durch Erfassung bzw. Abbildung des Verlaufs 40 des Spulenstroms.

Die Ansteuervorrichtung 12 umfasst ferner einen Speicherbereich 42, in welchem zum Vergleich mit dem erfassten Pumpstrom vorzugsweise nach Art eines Kennfeldes K Referenzwerte oder Referenzkennlinien abgelegt sind. Die Auswahl eines zum Vergleich mit dem erfassten Spulenstrom heranziehenden Referenzwertes bzw. einer Referenzkennlinie kann beruhend auf verschiedenen weiteren Betriebsparametern, wie z.B. der Temperatur T der zu fördernden Flüssigkeit, vorgenommen werden. In einem Entscheidungsbereich 44 wird dann entschieden, ob der erfasste Pumpstrom einen Verlauf wiedergibt, wie er, ggf. unter Berücksichtigung weiterer Betriebsparameter, zu erwarten ist. Dies bedeutet, dass durch Vergleich des erfassten Pumpstroms mit einem Referenzwert bzw. einer Referenzkennlinie entschieden werden kann, ob ein bestimmter Betriebszustand vorliegt. Beispielsweise kann anhand des in der Spule 24 fließenden Pumpstroms festgestellt werden, ob der Pumpbereich 22 ein flüssiges oder ein gasförmiges Medium fördert. Je nachdem, ob flüssig oder gasförmig, wird der Kolben sich bei Erregung der Spule 24 schneller verschieben können, was einen dementsprechend unterschiedlichen Verlauf des Spulenstroms zur Folge haben wird. Durch Vergleich des Spulenstroms mit den aus dem Kennfeld K herausnehmbaren Werten kann also entschieden werden, ob das geförderte Medium flüssig oder gasförmig ist. Dies ist in der Fig. 1 durch die Entscheidung ja für flüssig oder nein für gasförmig repräsentiert. Dabei bedeutet die Entscheidung ja, dass die Dosierpumpanordnung 14 in einem vorgesehenen, korrekten Betriebszustand ist und die gewünschte Flüssigkeitsmenge fördert. Die Entscheidung nein bedeutet in diesem Falle, dass nicht das gewünschte Medium gefördert wird, so dass beispielsweise bei Vorgabe einer bestimmten Taktanzahl nicht die erforderliche Menge der zuzudosierenden Flüssigkeit in den Brennstofftank 20 gefördert wird.

Das Ergebnis dieses Vergleichs bzw. der Entscheidung wird einem Korrekturglied 46, beispielsweise in Form eines Mikroprozessors, zugeleitet. Wird erkannt, dass die den Betrieb der Dosierpumpeinrichtung 14 charakterisierende Größe, also der Pumpstrom bzw. der Verlauf desselben, nicht der erwarteten Vorgabe, also der entsprechenden Größe im Kennfeld K entspricht, so kann durch diesen Mikroprozessor 46 ein entsprechendes Signal an den Steuerbereich 36 abgegeben werden, um beispielsweise dann, wenn erkannt worden ist, dass gasförmiges Medium und nicht flüssiges Medium gefördert wird, die Dosierpumpeinrichtung 14 so lange ohne Zählung der Takte zu betreiben, bis wieder erkannt wird, dass Flüssigkeit gefördert wird, und erst dann mit dem tatsächlichen Zählen der Fördermenge, beruhend auf der Anzahl der Takte, begonnen wird. Ferner kann vorgesehen sein, dass dann, wenn in einer vorgegebenen Zeit ab dieser entsprechenden Ansteuerung des Steuerbereichs 36 vermittels des Mikroprozessors 46 keine Änderung des Förderzustands eintritt, über eine Warneinrichtung 48 entweder auf optische, akustische oder mechanische Weise dem Fahrer mitgeteilt wird, dass Probleme in der Zudosierung bestehen. Die Kommunikation zwischen der Ansteuervorrichtung 12 und der Warneinrichtung 48 kann dabei entweder über das in einem Fahrzeug herkömmlicherweise vorhandene Bussystem (CAN) erfolgen oder über eine speziell dafür vorgesehene Leitung. Ferner ist es möglich, dass ein entsprechender Warnhinweis in einem Speicher abgelegt wird, so dass bei einem nächsten Werkstattaufenthalt durch Auslesen dieses Speichers erkannt werden kann, dass ein Fehler aufgetreten ist bzw. welcher Fehler aufgetreten ist.

Neben dem vorangehend beschriebenen Erkennen, ob flüssiges oder gasförmiges Medium gefördert wird, ist es selbstverständlich möglich, auch andere Fehlerzustände mit dem erfindungsgemäßen System zu erkennen. Dies beruht darauf, dass jedweder im Bereich der Dosierpumpeneinrichtung auftretende Fehler einen Einfluss auf die Arbeitsweise dieser Dosierpumpeinrichtung 14, insbesondere dem Pumpbereich 22, haben wird mit der Folge, dass durch Veränderung des Bewegungsablaufs des Pumpenkolbens und damit einhergehender Änderung der Induktivität der Spule 24 ein entsprechend geänderter Stromverlauf des Pumpstroms sich einstellen wird. Dies trifft beispielsweise auch zu, wenn eines der Ventile 26, 28 oder beide Ventile nicht korrekt arbeiten. Selbstverständlich wird ein Blockieren des an sich bewegbaren Kolbens auf diese Art und Weise erkennbar und möglicherweise vorhandene Leckagen in den Leitungen 30, 32 werden erkennbar. Jeder dieser Defekte beeinflusst den Pumpstrom, welcher über die Spule 24 fließt, in charakteristischer Weise, so dass durch Ablegen entsprechender für Defekte charakteristischer Kurven in dem Speicherbereich 42 und Vergleichen dieser charakteristischen mit dem tatsächlich erfassten Pumpstrom festgestellt werden kann, welcher dieser Verläufe zu dem tatsächlich erfassten Pumpstrom am besten passt bzw. zu welchem Verlauf der Pumpstrom den geringsten Unterschied aufweist. Auf diese Art und Weise kann mit vergleichsweise hoher Genauigkeit bestimmt werden, welcher der Fehlerzustände vorliegt. Diese Bestimmung kann in entsprechender Weise auch beruhend auf der Abweichung des Pumpenstroms bzw. des Verlaufs des Pumpenstroms von einem einem korrekten Betrieb zugeordneten Referenz-Pumpenstrom ermittelt werden.

Um bei einem derartigen Flüssigkeitszudosiersystem die Fehleranfälligkeit von vorne herein so gering als möglich halten zu können, können auch verschiedene konstruktive Maßnahmen ergriffen werden. So ist es beispielsweise möglich, abweichend von der in Fig. 2 prinzipiell dargestellten Anordnung, eine oder beide der Leitungen 30, 32 wegzulassen, so dass die Dosierpumpeinrichtung 14 unmittelbar an den Tank 18 für die zuzudosierende Flüssigkeit oder/und unmittelbar an dem Brennstofftank 20 anschließt. Während letztendlich bei der in Fig. 2 dargestellten Ausgestaltungsvariante die Baugruppen 18, 14, 30 voneinander getrennte Systembereiche sind, die über die Leitungen 30, 32 miteinander in Flüssigkeitsübertragungsverbindung stehen, kann bei der eben angesprochenen Abänderung eine bauteilemäßige Verschmelzung bzw. Ineinandergliederung stattfinden, die auch für einen kompakteren Aufbau sorgt. Auch hierbei sind dann noch Variationen möglich. Es ist beispielsweise möglich, die Dosierpumpeinrichtung 14 in einen der Tanks 18, 20 zu integrieren und sie mit dem anderen der Tanks über eine entsprechende Leitung 30 oder 32 in Flüssigkeitsverbindung zu bringen. Auch ist es möglich, die Dosierpumpeinrichtung 14 zusammen mit dem Tank 18 in den Tank 20 zu integrieren oder beispielsweise die beiden Tanks 18, 20 unmittelbar aneinander angrenzend und lediglich durch eine Wandung getrennt auszugestalten und in diese Wandung die Dosierpumpeinrichtung 14 zu integrieren.

Durch die vorliegende Erfindung ist ein Flüssigkeitszudosiersystem vorgeschlagen, das in einfacher und zuverlässiger Art und Weise Fehler bzw. Unregelmäßigkeiten im Betrieb erkennen kann. Dabei können verschiedene Systembereiche überwacht werden bzw. aufgetretene Unregelmäßigkeiten im Pumpstrom verschiedenen Systembereichen bzw. darin aufgetretenen Fehlern zugeordnet werden. Nach Erkennung eines bestimmten Fehlers bzw. Betriebszustandes können geeignete Maßnahmen ergriffen werden, wie z.B. das Aktivieren der Dosierpumpeinrichtung 14 derart und so lange, bis wieder das Fördern von Flüssigkeit erkannt wird, was insbesondere auch im Falle der Erstinbetriebnahme von Vorteil ist, um die verschiedenen Flüssigkeitsströmungswege zwischen dem Tank 18 und dem Tank 20 zu entlüften.

## Patentansprüche

**1.** Flüssigkeitszudosiersystem, insbesondere zum Zudosieren von Flüssigkeit zu einem Brennstoff oder zu bei einer Verbrennung sich ergebenden Abgasen, umfassend:
- eine elektrisch betreibbare Dosierpumpeinrichtung (14) zum Fördern der zuzudosierenden Flüssigkeit von einem Zudosierflüssigkeitstank (18) zu dem mit Zudosierflüssigkeit zu vermischenden Medium,
- eine Erfassungsanordnung (38) zum Erfassen einer im Betrieb der Dosierpumpeinrichtung (14) sich einstellenden und diesen charakterisierenden Betriebsgröße,
- eine Vergleichs/Entscheidungs-Einrichtung (42, 44) zum Vergleichen der Betriebsgröße mit wenigstens einem Referenzwert und zum Bestimmen des Betriebszustandes der Dosierpumpeinrichtung (14) beruhend auf dem Vergleichsergebnis.

**2.** Flüssigkeitszudosiersystem nach Anspruch 1,
**dadurch gekennzeichnet, dass** in der Vergleichs/Entscheidungs-Einrichtung (42, 44) eine Mehrzahl von Referenzwerten nach Art eines Kennfeldes (K) zum Vergleich mit der Betriebsgröße vorgesehen ist.

**3.** Flüssigkeitszudosiersystem nach Anspruch 1 oder 2,
**dadurch gekennzeichnet, dass** die Vergleichs/Entscheidungs-Einrichtung (42, 44) dazu ausgebildet ist, beruhend auf einer Abweichung der Betriebsgröße von dem wenigstens einen Referenzwert eine Unterscheidung zwischen verschiedenen Betriebszuständen der Dosierpumpeinrichtung (14) vorzunehmen.

**5.** Flüssigkeitszudosiersystem nach einem der Ansprüche 1 bis 4,
**dadurch gekennzeichnet, dass** in der Vergleichs/Entscheidungs-Einrichtung (42, 44) für eine Mehrzahl verschiedener Betriebsparameter (T), wie z.B. der Betriebstemperatur, verschiedene Referenzwerte vorgesehen sind.

**6.** Flüssigkeitszudosiersystem nach einem der Ansprüche 1 bis 5,
**dadurch gekennzeichnet, dass** die Erfassungsanordnung (38) dazu ausgebildet ist, als Betriebsgröße einen im Betrieb der Dosierpumpeinrichtung (14) fließenden Pumpstrom zu erfassen.
